Europäisches Patentamt

European Patent Office

Office européen des brevets

(19)

(11) Veröffentlichungsnummer: **0 249 076**
**A1**

# (12) EUROPÄISCHE PATENTANMELDUNG

(21) Anmeldenummer: **87107508.1**

(22) Anmeldetag: **22.05.87**

(51) Int. Cl.⁴: **H05F 3/02** , **H01H 13/70**

Die Bezeichnung der Erfindung wurde geändert (Richtlinien für die Prüfung im EPA, A-III, 7.3).

(30) Priorität: **27.05.86 DE 3617722**

(43) Veröffentlichungstag der Anmeldung:
**16.12.87 Patentblatt 87/51**

(84) Benannte Vertragsstaaten:
**CH DE FR IT LI SE**

(71) Anmelder: **Siemens Aktiengesellschaft Berlin
und München
Wittelsbacherplatz 2
D-8000 München 2(DE)**

(72) Erfinder: **Schiller, Kurt
Leonhardstrasse 70
D-8905 Mering(DE)**
Erfinder: **Luger, Johann
Arnoldstrasse 5
D-8000 München 50(DE)**
Erfinder: **Schierl, Hans
Aschau 1
D-8019 Steinhöring(DE)**
Erfinder: **Kallhardt, Heinrich
Agnes-Bernauer Strasse 42
D-8000 München 21(DE)**

(54) **Vorrichtung zum Schutz der Bedienungsperson bei Berührung eines in einem isolierten Gehäuse untergebrachten elektrischen Gerätes.**

(57) Aufgabe der vorliegenden Erfindng ist es, bei zu hoher elektrostatischer Aufladung der Bedienungsperson einmal die elektronischen Bauelemente des betreffenden Gerätes (2) zu schützen und zum anderen die Bedienungsperson selbst vor unangenehmen Entladungsströmen zu bewahren.

Diese Aufgabe wird durch ein im Bereich der Bedienungseinrichtung des Gerätes (2) angeordnetes, einen niedrigen ohmschen Widerstand aufweisendes, elektrisch leitfähiges Material gelöst, das in Reihe mit einem mit Nullpotential verbundenen hochohmigen Widerstand (11) geschaltet ist.

## FIG 1

## Vorrichtung zum Schutz der Bedienungsperson bei Berührung eines in einem isolierten Gehäuse untergebrachten elektrischen Gerätes sowie der im Inneren des Gerätes angeordneten Einrichtungen bei zu hoher elektrostatischer Aufladung der Bedienungsperson, insbesondere bei Geräten der Kommunikationstechnik

Die Erfindung betrifft eine Vorrichtung zum Schutz der Bedienungsperson bei Berührung eines in einem isolierten Gehäuse untergebrachten elektrischen Gerätes sowie der im Inneren des Gerätes angeordneten Einrichtungen bei zu hoher elektrostatischer Aufladung der Bedienungsperson, insbesondere bei Geräten der Kommunikationstechnik.

In Verbindung mit modernen stark isolierenden Materialien wird man immer häufiger mit elektrostatischer Entladung (ESD = electrostatic discharging) konfrontiert. Diese mehr oder weniger schmerzhafte Erfahrung ist allgemein bekannt. Die elektrostatische Aufladung der Bedienungsperson entsteht zumeist aufgrund von in Räumen verlegten Teppichböden aus Kunststoff bzw. von entsprechend gestalteten Sitzflächen von Sitzmöbeln. Aufgeladene Personen werden mit einem mehr oder weniger heftigen elektrischen Schlag belastet, wenn sie geerdete oder leitende Gegenstände berühren bzw. wenn sie Gegenstände anfasen, deren Durchschlagsfestigkeit geringer ist als die Aufladespannung. Außerdem entsteht bei der Entladung der Person mit einem hohen Strom ein starkes elektromagnetisches Feld, das in empfindlichen elektronischen Geräten Spannungen induzieren kann, die ihrerseits wiederum zu Störungen der Funktionsweise der Geräte führen können.

Um diesem Nachteil abzuhelfen, hat man zunächst gefordert, die Durchschlagsfestigkeit zu erhöhen. Dies ist beispielsweise erreichbar durch Vergrößerung der Abstände bzw. durch Zwischenlagen von Isolatoren. Ein derartiges Vorgehen stößt jedoch bald an Grenzen, da bei hohen Spannungen Neukonstruktionen erforderlich wären.

Aufgabe der Erfindung ist es daher, bei zu hoher elektrostatischer Aufladung der Bedienungsperson einmal die elektronischen Bauelemente des betreffenden Gerätes zu schützen und zum anderen die Bedienungsperson selbst vor unangenehmen Entladungsströmen zu bewahren.

Diese Aufgabe wird dadurch gelöst, daß im Bereich der Bedienungseinrichtung des Gerätes ein einen niedrigen ohmschen Widerstand (einige Ohm) aufweisendes elektrisch leitfähiges Material angeordnet ist, das in Reihe mit einem mit Nullpotential verbundenen hochohmigen Widerstand geschaltet ist.

Das nur einen geringen ohmschen Widerstand aufweisende elektrisch leitfähige Material bewirkt in Verbindung mit dem hochohmigen Widerstand eine Begrenzung des Ladestroms, so daß die Entladung der Bedienungsperson über das Gerät nahezu unmerklich vonstatten geht. Darüber hinaus wird durch den kleinen Entladestrom der Aufbau eines großen elektromagnetischen Feldes vermieden, wodurch die Gefahr von auf die elektronischen Bauteile einwirkenden Induktionsspannungen erheblich reduziert wird. Somit können durch einfache Maßnahmen sowohl die Bedienungsperson als auch die elektronischen Bauteile des elektrischen Gerätes geschützt werden.

Dabei kann das elektrisch leitfähige Material durch eine auf der Innenseite des Gerätegehäuses angeordnete, eine Verbindung mit den Bedienungselementen herstellende Schicht gebildet sein. So kann z. B. bei einem Fernsprechgerät auf einer der Schalenhälften eines aus zwei Schalen bestehenden Handapparates das elektrisch leitfähige Material in Form einer Leitpaste derart aufgebracht sein, daß es bis zu der umlaufenden Trennfuge verläuft und somit eine Verbindung zur Bedienungsperson bewirkt. Diese Schicht kann ebenfalls durch eine Metallfolie oder eine elektrisch leitende Kunststoffolie gebildet sein.

Der mit diesem elektrisch leitenden Material verbundene hochohmige Widerstand kann beispielsweise durch ein diskretes Bauelement oder durch eine auf einem Träger aufgebrachte Widerstandspaste gebildet sein. Die Widerstandspaste kann z. B. auf einer Trägerfolie im Siebdruckverfahren aufgebracht werden, so daß eine kostengünstige Massenfertigung möglich ist. Dabei kann dieser Träger mit einer Ausnehmung mit Kontakteinrichtungen versehen sein, die auf die zu - schützenden Bauteile aufsteckbar sind. Bei Verwendung der bereits erwähnten Trägerfolie lassen sich die Kontaktierungsvorrichtungen als in die Ausnehmung hineinragende, untereinander und mit dem hochohmigen Widerstand verbundene Lappen ausgestalten, die bei dem zuvor genannten zweiteiligen Handapparat z. B. an dem Metallgehäuse des elektroakustischen Wandlers zur Anlage gelangen.

Die Erfindung soll im folgenden anhand eines Ausführungsbeispiels näher erläutert.

Es zeigen

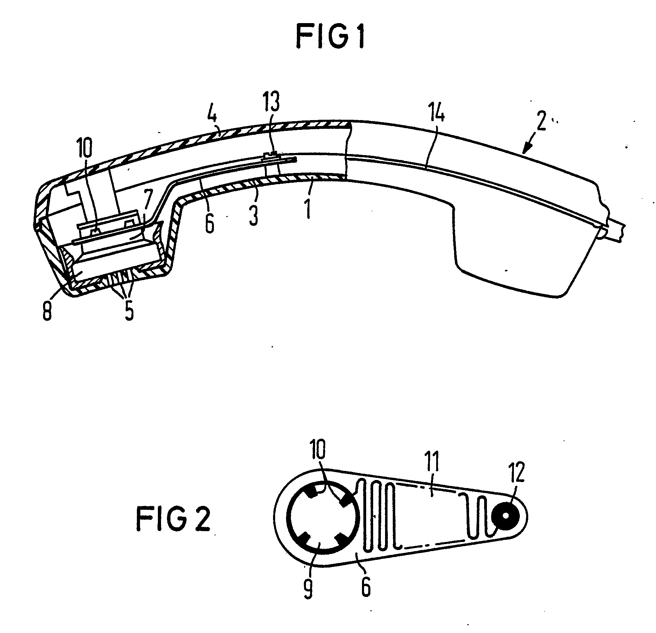

Fig. 1 eine teilweise geschnittene Seitenansicht eines Handapparates für Fernsprechstationen,

Fig. 2 eine in den Handapparat einlegbare und kontaktierbare Widerstandsfolie.

Mittels der hier gezeigten Vorrichtung sollen bei iso lierten elektrischen Geräten in deren Bedienungsbereich die Geräte selbst wie auch die Bedienungsperson bei deren hoher elektrostatischer Aufladung geschützt werden. Im vorliegenden Ausführungsbeispiel ist ein möglicher Schutz für den Hörbereich eines Handapparates einer Fernsprechstation sowie für die betreffende Bedienungsperson aufgezeigt.

Zu diesem Zweck wird eine Schalenhälfte 1 des Handapparates 2 innenseitig vollständig oder teilweise mit einer Leitpaste 3 versehen, die beispielsweise im Spritzverfahren aufgebracht werden kann. Die Leitpaste wird dabei soweit aufgetragen, daß sie bis zur umlaufenden Trennfuge 14 der beiden Schalenhälften 1 und 4 des Handapparates 2 verläuft, so daß dadurch eine elektrische Verbindung zu der Bedienungsperson hergestellt ist. Ebenfalls sind die Schalldurchlaßöffnungen 5 im Hörbereich 6 des Handapparates 2 von der Leitpaste 3 bedeckt. Diese einen relativ niedrigen ohmschen Widerstand aufweisende Leitpaste kann auch beispielsweise durch eine entsprechende Metallfolie oder leitende Kunststoffolie ersetzt werden, wobei die letztgenannten Folien im Bereich der Trennfuge als Zierfolie wirken können.

Innerhalb des Handapparatekörpers wird im Bereich der die Leitpaste 3 aufweisenden Schalenhälfte 1 eine weitere Widerstandsfolie 6 befestigt. Diese z. B. im Siebdruckverfahren herstellbare Widerstandsfolie besitzt einen in etwa dem Außendurchmesser des Metallgehäuses 7 eines elektroakustischen Wandlers 8 entsprechenden kreisrunden Ausschnitt 9. In das Zentrum dieses Ausschnittes 9 weisen mehrere mit Leitpaste bedruckte und ringförmig untereinander verbundene Lappen 10 hinein, die über einen mäanderförmig ausgebildeten, hochohmigen aus Widerstandspaste bestehenden Widerstand 11 mit einem Anschlußpunkt 12 verbunden sind.

Die Kontaktierung der Widerstandsfolie mit dem Wandler erfolgt durch Aufstecken mit ihrem den Ausschnitt 9 aufweisenden Bereich, wobei sich die Lappen 10 an das Metallgehäuse anlegen. Die elektrische Verbindung der Widerstandsfolie 6 mit der Leitpaste 3 innerhalb der Schalenhälfte 1 des Handapparates 2 erfolgt durch die Schraube 13. Die Ableitung einer zu hohen elektrostatischen Aufladung erfolgt dann über das an Masse liegende Metallgehäuse 7 des elektroakustischen Wandlers 8.

kationstechnik, **dadurch gekennzeichnet, daß** im Bereich der Bedienungseinrichtung des Gerätes (2) ein einen niedrigen ohmschen Widerstand (einige Ohm) aufweisendes elektrisch leitfähiges Material (3) angeordnet ist, das in Reihe mit einem mit Nullpotential verbundenen hochohmigen Widerstand (11) geschaltet ist.

2. Vorrichtung nach Anspruch 1, **dadurch gekennzeichnet, daß** das elektrisch leitfähige Material durch eine auf der Innenseite des Gerätegehäuses angeordnete, eine Verbindung mit den Bedienungselementen herstellende Schicht (3) gebildet ist.

3. Vorrichtung nach Anspruch 2, **dadurch gekennzeichnet, daß** die Schicht durch eine Leitpaste (3) gebildet ist.

4. Vorrichtung nach Anspruch 2, **dadurch gekennzeichnet, daß** die Schicht durch eine Metallfolie gebildet ist.

5. Vorrichtung nach Anspruch 2, **dadurch gekennzeichnet, daß** die Schicht durch eine elektrisch leitende Kunststoffolie gebildet ist.

6. Vorrichtung nach Anspruch 1, **dadurch gekennzeichnet, daß** der Widerstand durch ein diskretes Bauelement gebildet ist.

7. Vorrichtung nach Anspruch 1, **dadurch gekennzeichnet, daß** der Widerstand durch eine auf einem Träger (6) aufgebrachte Widerstandspaste (11) gebildet ist.

8. Vorrichtung nach Anspruch 7, **dadurch gekennzeichnet, daß** der Träger (6) einen Ausschnitt (9) mit Kontaktierungsvorrichtungen (10) aufweist, die auf zu schützende Bauteile (7, 8) aufsteckbar sind.

9. Vorrichtung nach Anspruch 1, **dadurch gekennzeichnet, daß** das elektrische Gerät durch einen aus zwei Schalenhälften (1, 4) aufgebauten Handapparat (2) gebildet ist, wobei in einer der Schalenhälften (1) das elektrisch leitfähige Material (3) derart aufgebracht ist, daß eine Verbindung zur Bedienungsperson hergestellt ist.

10. Vorrichtung nach Anspruch 9, **dadurch gekennzeichnet, daß** die Schalldurchlaßöffnungen (5) des Handapparates (2) im Bereich der elektroakustischen Wandler (8) ebenfalls mit dem elektrisch leitfähigen Material (3) beschichtet sind.

**Ansprüche**

1. Vorrichtung zum Schutz der Bedienungsperson bei Berührung eines in einem isolierten Gehäuse untergebrachten elektrischen Gerätes sowie der im Inneren des elektrischen Gerätes angeordneten elektronischen Einrichtungen bei zu hoher elektrostatischer Aufladung der Bedienungsperson, insbesondere bei Geräten der Kommuni-

# FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 271 333 (NORTHERN TELECOM) * Spalte 3, Zeile 46 - Spalte 4, Zeile 6 * | 1 | H 05 F 3/02 H 01 H 13/70 |
| A | | 2,4,9 | |
| | --- | | |
| Y | US-A-4 440 990 (SMK ELECTRONICS) * Spalte 3, Zeilen 42-63; Spalte 1, Zeilen 40-50 * | 1 | |
| A | | 6,7 | |
| | --- | | |
| A | US-A-4 303 960 (GTE PRODUCTS) * Spalte 3, Zeilen 37-61 * | 1-3 | |

RECHERCHIERTE SACHGEBIETE (Int. Cl.4)

H 05 F
H 01 H

-----

Der vorliegende Recherchenbericht wurde für alle Patentansprüche erstellt.

| Recherchenort | Abschlußdatum der Recherche | Prüfer |
|---|---|---|
| DEN HAAG | 14-09-1987 | DAILLOUX C. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82